# FASCICULE DE BREVET EUROPEEN

(11) **EP 2 198 145 B1**
(45) Date de publication et mention de la délivrance du brevet: **13.04.2016**
(21) Numéro de dépôt: 08837897.1
(22) Date de dépôt: 07.10.2008
(51) Int. Cl.: F02K 9/46, F02K 9/56

(54) **DISPOSITIF ET PROCEDE DE MOTORISATION DE POMPE POUR MOTEUR FUSEE PAR MOTEUR A COMBUSTION INTERNE**
VORRICHTUNG UND VERFAHREN ZUR MOTORISIERUNG EINER RAKETENANTRIEBSPUMPE MITTELS EINES VERBRENNUNGSMOTORS
METHOD AND DEVICE ENABLING A ROCKET ENGINE PUMP TO BE DRIVEN BY AN INTERNAL COMBUSTION ENGINE

(30) Priorité: 08.10.2007 FR 0758125
(43) Date de publication de la demande: 23.06.2010
(73) Titulaire: Airbus Defence and Space SAS, 78130 Les Mureaux (FR)
(72) Inventeur: RAYMOND, Gérald, F-33160 Saint Medard En Jalles (FR); CAYE, Paul, F-95800 Courdimanche (FR); RICHARD, Frédéric, F-75013 Paris (FR)
(74) Mandataire: Ipside
(86) Numéro de dépôt international: PCT/EP2008/063397
(87) Numéro de publication internationale: WO 2009/047250

(56) Documents cités:
- WO-A-99/65769
- DE-A1- 3 838 574
- FR-A- 2 801 936
- GB-A- 876 186
- US-A- 2 531 761
- US-A- 3 069 849
- US-A- 3 168 809

## Description

La présente invention concerne un dispositif et un procédé de motorisation de pompe pour moteur fusée par moteur à combustion interne.

Le domaine technique concerné par la présente invention est celui de la propulsion fusée capable d'une forte poussée, comme celle nécessaire à un lanceur spatial.

Pour ce type d'application, il existe trois familles de technologies, selon l'état physique des ergols utilisés, la propulsion solide, où l'ergol est stocké dans une chambre de combustion, la propulsion liquide qui peut utiliser un, deux voire plus d'ergols, où l'on doit transférer des ergols de réservoirs de stockage vers une chambre de combustion et la propulsion hybride qui utilise un ergol liquide et un ergol solide, et où l'on doit transférer un ergol liquide vers une chambre de combustion où est stocké un ergol solide.

La présente invention concerne plus précisément les dispositifs de transfert des ergols liquides vers la chambre de combustion et plus particulièrement la motorisation de ce transfert.

Pour être capable d'assurer une forte poussée, les moteurs fusée doivent fonctionner à pression élevée de quelques dizaines de bar, de 30 à 50 bar pour les moteurs d'Ariane par exemple, avec un débit de matière élevé.

Dans le cas de la propulsion liquide, c'est le système d'alimentation en ergol qui doit assurer ce débit et cette pression. Pour réaliser cette alimentation sous pression, deux moyens sont communément utilisés, la mise en pression directe des réservoirs d'ergols et le pompage par pompes à partir de réservoir basse pression.

La première solution possède le mérite de la simplicité, mais demande des réservoirs susceptibles de tenir des pressions élevées, ce qui induit des problèmes de masse et de sécurité. Cette solution est en pratique réservée à des moteurs de faible puissance, tels que les moteur de contrôle d'attitude ou les étages supérieurs de lanceurs par exemple, où la mise en place d'un moyen externe de pressurisation est moins intéressante.

La seconde solution requiert l'utilisation de pompes spécifiques capable du débit important exigé par les moteurs. Ce débit, joint à la forte augmentation de pression demandée conduit à des pompes de puissance considérable, de plusieurs centaines de kilowatts à plusieurs mégawatts.

Dans les lanceurs spatiaux actuels et passés, la motorisation de ces pompes est faite systématiquement par des moteurs à turbine centrifuge, utilisant généralement les mêmes ergols que le moteur principal.

Ces turbines centrifuges sont entraînées par des gaz chauds. Ces gaz chauds sont généralement produits par prélèvement d'une partie des ergols du moteur fusée et combustion de ces prélèvements dans une petite chambre de combustion spécifique. Ils peuvent aussi être produits par un générateur de gaz, souvent un petit propulseur à poudre.

L'ensemble turbine centrifuge/pompe est appelé turbopompe. La turbopompe est un objet complexe et fragile car il doit transmettre des puissances très élevées, plusieurs mégawatts, grâce à des vitesses de rotation très élevées, par exemple de 10 000 à 30 000 tr/mn, qui induisent des contraintes mécaniques très fortes dans les matériaux.

Par ailleurs, la motorisation par gaz chauds issus d'une combustion induit des températures très élevées côté turbine et des gradients de température très important dans les arbres de transmission entre la turbine et la pompe.

Cet effet de gradient thermique est encore accentué quand les ergols sont cryogéniques, la température côté pompe étant de quelques dizaines de degrés Kelvin alors qu'à quelques centimètres seulement, la température de la turbine centrifuge moteur est à plus de 1000 degrés Celsius.

Enfin, du fait de ces conditions de fonctionnement extrêmes, le démarrage de la turbopompe est délicat avec une mise en froid d'un côté, en chaud de l'autre et mise en rotation de l'ensemble suffisamment progressive pour ne pas induire de gradient transitoire encore plus élevé susceptible de rompre la turbopompe.

Au final, la turbopompe est un objet très coûteux et à faible durée de vie, utilisé sur les lanceurs classiques qui ont une faible durée de fonctionnement qui se chiffre en minutes.

Sur les lanceurs réutilisables comme la navette spatiale, les turbopompes doivent être changées quasiment à chaque vol, ce qui est très lourd en terme de coût de maintenance.

Une solution proposée pour remplacer une turbopompe est décrite dans le document US 6 457 306.

Ce document décrit en particulier de remplacer la turbine d'entraînement de la pompe par un moteur électrique lui-même alimenté par des batteries.

De ce fait, on n'a plus besoin d'un petit moteur fusée entraînant une turbine, on consomme moins d'ergol, on n'a plus de gradients de températures si élevés et l'ensemble est plus fiable, et plus adapté à un lanceur réutilisable.

On peut de plus réguler la rotation du moteur électrique et donc faire varier les débits d'ergols et donc la poussée de façon plus aisée et on peut aussi gérer le démarrage de la pompe plus facilement pour éviter des gradients transitoires trop élevés.

Par contre la source d'énergie alimentant le moteur doit être capable de fournir une puissance qui se chiffre en Mégawatts durant la phase de poussée ce qui implique des contraintes de masse et de dimensionnement importantes pour cette source d'énergie et pour les moyens d'alimentation du moteur électrique.

L'ensemble stockage d'énergie et moteur sont finalement très lourds.

Une autre solution se trouve dans le document FR-A-2801936.

L'objectif de la présente invention est de fournir une motorisation pour pompe d'ergols simple, fiable, pouvant être démarrée en vol et qui puisse en particulier être utilisée sur des ensembles de propulsion réutilisables.

Pour ce faire, l'invention propose de remplacer le moteur à turbine de la pompe ou le moteur électrique par un dispositif simple, indépendant des ergols, dont la mise en marche et la régulation notamment sont indépendantes du fonctionnement de l'ensemble de propulsion du véhicule et prévoit pour ce faire d'utiliser un moteur à combustion interne.

Plus précisément la présente invention prévoit un dispositif de motorisation de pompe d'alimentation d'ergols d'un moteur fusée comme defini dans la revendication 1.

L'usage d'un tel comburant, normalement inutilisé dans les techniques spatiales du fait de la masse d'azote inutile à la combustion, est ici préféré pour permettre d'utiliser un moteur à combustion interne de type éprouvé dans le domaine terrestre aérobie en conservant les paramètres de fonctionnement d'un tel moteur.

Plus particulièrement, le comburant nécessaire audit moteur à combustion interne est contenu dans un réservoir sous pression relié audit moteur par un détendeur.

Le comburant est avantageusement constitué par de l'air enrichi en oxygène ou de l'air enrichi en gaz nitreux.

Préférablement, le carburant est un hydrocarbure liquide.

Le carburant est selon une première variante du kérosène par exemple selon la norme américaine ASTM D1655 et ses différentes révisions et de l'essence par exemple comme définie à l'article 19 du règlement FIA (fédération internationale de l'automobile) année 2007 ou la norme EN 228 selon une seconde variante.

Selon un premier mode de réalisation avantageux de l'invention, le moteur à combustion interne est un moteur à pistons.

Selon un mode de réalisation alternatif, ledit moteur à combustion interne est un moteur à turbine axiale et compresseur.

Avantageusement, ledit moteur à turbine axiale est un moteur d'hélicoptère.

L'invention concerne en outre un dispositif de motorisation de pompe d'alimentation de moteur fusée qui comporte un démarreur électrique pour ledit moteur à combustion interne.

Préférablement, ledit moteur à combustion interne comporte un circuit de refroidissement fonctionnant en circuit fermé par le moyen d'un échangeur de chaleur placé sur les canalisations d'admission des ergols du moteur fusée.

L'invention prévoit également un dispositif d'alimentation de moteur fusée caractérisé en ce qu'il comporte au moins deux pompes chacune motorisée par un dispositif de motorisation selon l'invention et des moyens de gestion des moteurs à combustion interne d'entraînement des pompes adaptés pour faire varier indépendamment les paramètres de fonctionnement desdits moteurs en sorte de réguler indépendamment les vitesses de rotation des pompes ainsi qu'un procédé de mise en route et d'alimentation d'un moteur fusée au moyen de pompes motorisées par au moins un dispositif selon l'invention caractérisé en ce qu'il comporte:
- une étape de démarrage du moteur à combustion interne dudit au moins un dispositif à une altitude de mise à feu du moteur fusée et de mise en froid de la pompe couplée au moteur à combustion interne,
- une étape d'ouverture de vannes de réservoirs d'ergols du moteur fusée en parallèle à une montée au régime nominal de fonctionnement du moteur à combustion interne,
- une étape d'amorçage des pompes par la pression des réservoirs d'ergols et de début d'alimentation du moteur fusée,
- une régulation du débit des pompes par régulation du régime de rotation du ou des moteurs à combustion interne d'entraînement des pompes.

L'invention trouve en particulier son application pour les lanceurs réutilisables et s'applique en particulier à un avion spatial c'est à dire un lanceur spatial capable de décoller du sol comme un avion puis de quitter l'atmosphère terrestre pour atteindre l'espace.

Dans l'espace ces avions spatiaux utilisent un propulseur anaérobie de type moteur fusée. Pour leur vol atmosphérique ils utilisent des propulseurs aérobies comme des réacteurs.

L'invention permet de motoriser les pompes du moteur fusée de l'avion spatial avec un dispositif robuste et éprouvé utilisant un comburant et un carburant simple à mettre en oeuvre et à produire, le dispositif restant suffisamment léger pour être embarqué dans l'avion spatial.

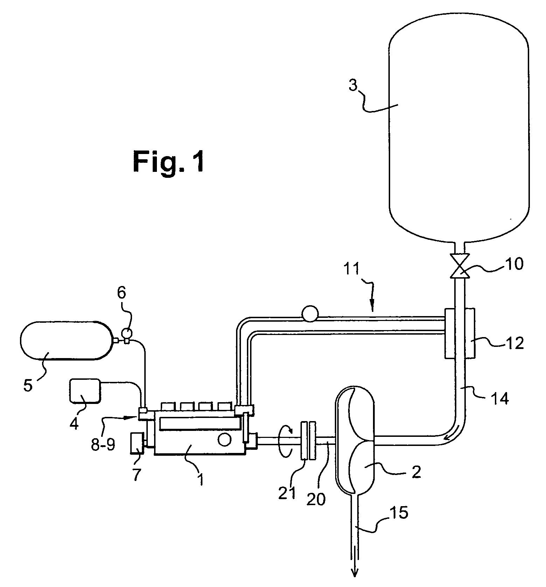

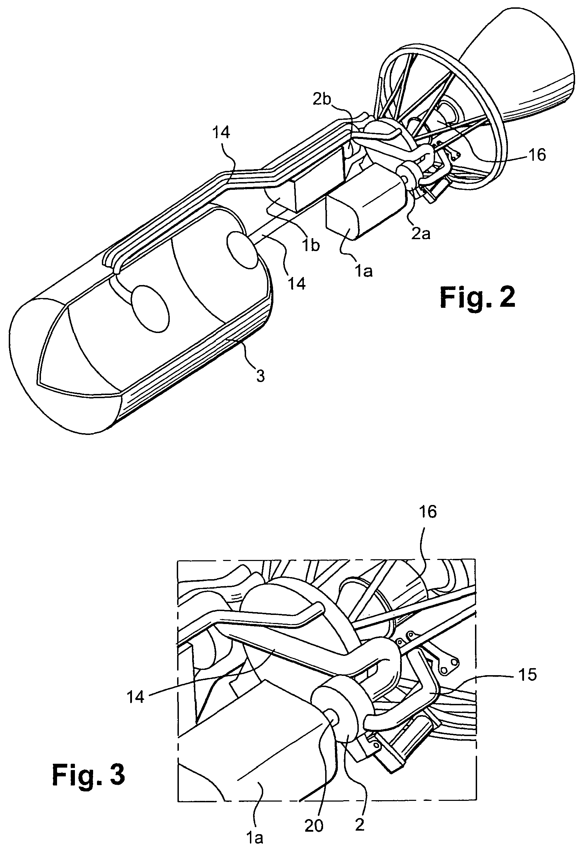

D'autres caractéristiques et avantages de l'invention seront mieux compris à la lecture de la description qui suit d'un exemple de réalisation non limitatif de l'invention accompagné des dessins qui représentent:
en figure 1: une représentation schématique du principe du dispositif de l'invention;
en figure 2: un exemple d'implantation du dispositif de l'invention dans un avion spatial;
en figure 3: un détail de la figure 2.

Selon la figure 1 schématique, on décrit l'utilisation d'un moteur à combustion interne 1 de type moteur à pistons pour la motorisation d'une pompe 2 d'alimentation d'un moteur fusée d'un avion spatial.

Dans un tel véhicule la propulsion fusée n'est utilisée qu'après un vol type avion.

Mais le moteur à combustion interne de l'invention 1 pourrait être utilisée pour toute application d'un moteur fusée, que ce soit un étage de lanceur ou un véhicule interplanétaire ou un satellite, dans la mesure évidemment où le remplacement d'une motorisation par turbopompe à turbine centrifuge est désiré.

Selon la figure 1, le moteur à combustion interne 1 est couplé à l'axe de la pompe centrifuge 2 par un arbre 20 au travers d'un embrayage 21 de type connu des moteurs à combustion interne.

Le moteur à combustion interne de type aérobie est utilisé dans une phase de vol sans atmosphère et est alimenté en carburant par l'intermédiaire d'un réservoir 4 placé à proximité du moteur. Son alimentation en comburant est effectuée par le moyen d'un réservoir 5 d'air comprimé muni d'un détendeur 6.

On simule ainsi un milieu aérobie par l'utilisation d'un réservoir comprimé et d'un détendeur.

L'air comprimé peut éventuellement être remplacé par de l'air enrichi en oxygène ou en gaz nitreux, méthode qui augmente la puissance disponible et diminue la masse embarquée mais demande un changement de réglage du point de fonctionnement thermodynamique du moteur ou un gaz contenant de l'oxygène, ne changeant pas la masse embarquée.

La séquence de fonctionnement et de mise à feu du moteur fusée est la suivante.

Arrivé à l'altitude de mise à feu du moteur fusée, le moteur à combustion interne est démarré par un démarreur 7 de type démarreur électrique. Simultanément, la pompe 2 est mise en froid et couplée au moteur. Les vannes 10 des réservoirs 3 du moteur fusée sont alors ouvertes et les ergols remplissent la pompe par une canalisation amont 14 et parallèlement le moteur 1 poussé à son régime de fonctionnement nominal par des moyens de réglage 8, 9. La pression des réservoirs 3 amorce les pompes 2 et le moteur fusée est alimenté par une canalisation 15 de sortie de la pompe.

A l'issue de l'épuisement des ergols, le moteur à combustion interne d'entraînement de la pompe ou des pompes est arrêté.

Le fait de remplacer une turbine centrifuge de turbopompe, mise en rotation par un générateur de gaz, par un moteur à combustion interne raccordé à la pompe par une arbre et un embrayage permet de s'affranchir des problèmes de démarrage de la turbine le plus souvent réalisé de manière pyrotechnique.

L'utilisation d'un moteur alimenté par ses propres réservoirs de carburant et de comburant permet en outre de se passer de la complexité de l'alimentation de la turbine qui nécessite un piquage sur le circuit d'alimentation du moteur fusée.

En outre, les moteurs à combustion interne tels que les moteurs à pistons et les moteurs à turbine axiale et compresseur offrant une vitesse beaucoup plus stable par nature que les turbines centrifuges entraînées par un générateur de gaz chauds, les problèmes de stabilité de fonctionnement de la pompe sont résolus.

De plus, l'utilisation d'un moteur à combustion interne à alimentation séparée permet d'éviter les risques de survitesse de la turbine en phase d'épuisement des ergols du moteurs fusée.

Enfin le dispositif de l'invention résout les problèmes de couplage sur le même axe de zones très chaudes et très froides en éloignant l'élément moteur de la pompe et en prévoyant un circuit de refroidissement de l'élément moteur.

La souplesse d'utilisation d'un moteur à combustion interne dont le fonctionnement est piloté comparée à celle d'une turbo pompe pour laquelle la turbine est uniquement soufflée par les gaz chauds d'un générateur de gaz permet les modes de fonctionnement suivants :
- démarrage progressif de la pompe centrifuge, évitant les chocs mécaniques engendrés par les démarrages pyrotechniques des turbines centrifuges,
- pilotage du cycle de mise en froid de la pompe,
- réglage fin et aisément variable de la vitesse de rotation du moteur, permettant de faire varier le débit et la pression de sortie pompe en fonction du régime requis, notamment au démarrage du moteur fusée alors que les turbo pompes ne sont généralement capables que d'une seule vitesse de rotation,
- possibilité de motoriser séparément les pompes de carburant et de comburant, ce qui permet de faire varier le taux de mélange et d'ajuster séparément les débits d'ergols pour tenir compte des différences de pertes de charges dans les circuits. En effet, dans le cas d'ergols cryogéniques le comburant par exemple Hydrogène ou méthane est souvent utilisé pour refroidir la tuyère. Cette utilisation requiert des pressions carburant/comburant en entrée moteur différentes. La régulation du point de fonctionnement optimal est délicate lorsque ces pressions sont fournies par des pompes centrifuges motorisées par une turbine centrifuge unique.

A titre d'exemple de réalisation on considérera les hypothèses suivantes correspondant à un cas concret de réalisation dans le cas d'un avion spatial:

Le moteur fusée utilise du méthane liquide (LCH4) et de l'oxygène liquide (LOx), le moteur fonctionne à une pression d'entrée moteur de 50 bar pour l'oxygène liquide et 60 bar pour le méthane, il fonctionne pendant une durée de l'ordre de 80 secondes et nécessite 7,5 tonnes d'ergols.

En outre, la vitesse de pompe est de l'ordre de 15 000 tours/mn. Cette vitesse est habituelle pour les pompes LOx et LCH4.

Pour le calcul des paramètres de fonctionnement des moteurs entraînant les pompes on prend en outre comme hypothèses conservatives que le rendement minimal de la pompe est de l'ordre de 60% pour la masse d'ergols à comprimer de 7500 kg.

Ceci correspond à un volume de 9,1 m3 environ et on considère des débits supposés constants de 63,5 l/s d'oxygène liquide et 51,3 l/s de méthane liquide.

Selon ces paramètres, en ce qui concerne la pompe oxygène liquide et compte tenu du rendement, la puissance demandée est de 530 kW, soit 720 chevaux environ.

En ce qui concerne la pompe méthane liquide, et compte tenu du rendement, la puissance demandée, dans le cas pris comme exemple, est de 514 kW soit 698 chevaux environ.

Ces puissances sont très voisines, ce qui permet de considérer une motorisation séparée des pompes par des moteurs identiques.

Une première solution selon la présente invention consiste à utiliser des moteurs à combustion interne de type moteurs de compétition automobile dont le régime de fonctionnement et la puissance sont réglables.

Avec une consommation typique de 0,27 litre par cheval et par heure, c'est environ 8 litres de carburant (pour les deux moteurs) qui sont nécessaire pour une mission. La combustion de cette quantité de carburant requiert 138 kg d'air soit 125 m3. Comprimé à 200 bar, ce volume est contenu dans deux réservoirs de 320 litres chacun.

Comme vu précédemment, il est à noter que le volume d'air peut être avantageusement réduit en utilisant de l'air enrichi en oxygène ou en gaz nitreux. L'utilisation d'air sous forme liquéfié peut aussi permettre de réduire le volume embarqué.

La puissance requise correspond à celle des moteurs utilisés en compétition automobile de formule 1 qui ont une puissance de 750 à 900 chevaux. Ces moteurs sont prévus pour une durée minimum de vie de 10 h à forte puissance correspondant à supporter deux grand prix de1h30 chacun environ et les séances d'essais et de préparation. Comparée aux durées d'utilisation prévues de l'ordre de 80 s par vol, cela permet de réaliser de 450 à 500 vols pour un moteur.

En outre, ce type de moteur à une masse de 95 kg environ ce qui reste modéré.

Selon la présente invention, l'utilisation d'un moteur de type formule 1 est rendue possible pour l'entraînement d'une pompe d'alimentation de moteur fusée dans un véhicule spatial grâce aux aménagements suivants:
- la réalisation d'une alimentation directe en air ou gaz comburant par un réservoir comprimé et un détendeur,
- un couplage de la pompe sur l'arbre moteur,
- un réglage de l'alimentation en carburant notamment pour tenir compte de l'orientation physique du moteur et des accélérations,
- un aménagement du circuit de refroidissement pour tenir compte de l'ambiance extérieure (- 50°C environ) et de l'absence relative d'air extérieur.

La solution privilégiée par l'invention est de relier le circuit de refroidissement 11 d'origine du ou des moteurs à combustion interne à un échangeur de chaleur 12 placé sur les canalisations d'admission 14 des ergols qui sont dans ce cas cryogéniques ce qui permet de réaliser en outre un échangeur très compact.

Le débit de plus de 100 l/s ceux-ci permet de disposer d'une source froide amplement suffisante. Le liquide de refroidissement utilisé pour le circuit de refroidissement des moteurs à combustion interne est un liquide adapté aux et compatible avec les très basses températures des propergols.

On prévoit en outre un capotage des éléments pouvant souffrir d'un passage au vide, l'échappement du ou des moteurs à combustion interne se faisant directement à l'arrière du véhicule.

La procédure de démarrage du moteur à combustion interne est préférablement réalisée moteur en position horizontale pour permettre la mise en place de sa lubrification et le démarrage est adapté aux conditions de basses températures par l'usage de réchauffeurs locaux ou par une mise en régime progressive.

Le bilan de masse pour de tels paramètres et l'application moteur automobile fait ressortir une masse de l'ordre de 500 à 650 kg.

| | |
|---|---|
| Deux moteurs | 170 à 190 kg |
| Carburant | 9 kg |
| Air comprimé | 140 kg (avec marges) |
| Deux réservoirs d'air comprimé | 160 kg |
| Accessoires (démarreur, électronique...) | 40 kg |
| Deux pompes centrifuges | de l'ordre de 40 kg |
| Total | 550 à 600kg et plus précisément 559 à 579 kg |

La figure 2 représente un exemple d'implantation de deux moteurs à combustion interne de type moteurs à pistons disposés entre un réservoir d'ergols 3 et un moteur fusée 16 d'un aéronef.

Les moteurs sont disposés diamétralement opposés autour de l'axe traversant le réservoir et le moteur fusée au dessus des pompes 2a, 2b alimentant le moteur fusée 16.

Le détail de la figure 3 permet de distinguer l'arbre 20 de liaison entre le moteur 1 a et la pompe 2a.

Une seconde solution consiste à utiliser un moteur de type turbine d'hélicoptère comprenant un compresseur une chambre de combustion et une turbine sur un axe commun en lieu et place des deux moteurs à pistons.

Une turbine d'hélicoptère de type TM333 2B2 de la société Turboméca est notamment appropriée pour une telle application.

Une telle turbine à compresseur peut fournir de l'ordre de 1100 à 1200 Chevaux en continu à un régime de rotation en continu de 6000 t/mn, la encore réglables.

Dans cet exemple, un moteur à turbine axiale unique est reliée aux deux pompes, pompe comburant et pompe carburant du moteur fusée, par l'intermédiaire d'une démultiplication fixe avec une gestion du régime du moteur à turbine pour augmenter la vitesse de rotation jusqu'à la valeur requise pour les pompes centrifuges.

Les paramètres d'utilisation d'un tel moteur à turbine axiale sont les suivants:
- masse unitaire 166 kg;
- consommation d'air pour 80 secondes de fonctionnement: 120 kg;
- consommation de carburant (kérosène) 6 à 7 kg;

L'admission d'air se fait par aspiration d'air comprimé au travers d'un détendeur en entrée du compresseur et l'échappement se fait directement à l'arrière du véhicule.

Les valeurs du bilan de masse pour un moteur à turbine axiale tel qu'un moteur d'hélicoptère telle que décrit sont du même ordre de grandeur que celles pour la solution à moteurs automobiles de type formule 1.

La masse des moteurs F1 et du moteur à turbine d'hélicoptère considérée est celle de moteurs directement issus de leur domaine d'application et ne tient pas compte des réductions possible du fait de la suppression d'éléments uniquement nécessaires pour leur application initiale, un gain de masse est donc possible.

En résumé, le dispositif de motorisation de pompe 2 d'alimentation de moteur fusée de véhicule spatial comprend au moins un moteur à combustion interne 1 du type moteur à combustion interne fonctionnant avec un mélange d'air et d'hydrocarbures, moteur à pistons ou moteur à turbine axiale et un moyen 20 de transmission de la rotation de ce moteur 1 à la pompe 2.

Selon l'exemple de la figure 1 le moyen de transmission 20 est un arbre entre le moteur à combustion interne et la pompe et le moyen de transmission 20 comporte un embrayage 21.

Selon un premier mode de réalisation, le moteur à combustion interne est un moteur multi-cylindres de type moteur de véhicule automobile de compétition.

Selon un mode de réalisation alternatif, le moteur à combustion interne 1 est un moteur à turbine axiale et compresseur aéronautique.

Le moteur 1 est alimenté par ses propres réservoirs 4, 5 de carburant et de comburant indépendants des réservoirs 3 d'ergols du moteur fusée.

Le réservoir de comburant 5 est un réservoir de gaz sous pression relié à l'entrée d'air du moteur au travers d'un détendeur 6.

Il comporte un circuit de refroidissement par le moyen d'un échangeur de chaleur 12 placé sur une ou plusieurs canalisations 14 d'admission des ergols cryogéniques, le circuit de refroidissement fonctionnant en circuit fermé.

Un démarreur électrique 7 permet de lancer le moteur à combustion interne.

Le dispositif d'alimentation de moteur fusée représenté à la figure 2 comporte deux pompes chacune motorisée par un dispositif moteur 1, 1' et des moyens de gestion 8, 9 des moteurs à combustion interne adaptés pour faire varier indépendamment les paramètres de fonctionnement desdits moteurs à combustion interne en sorte de réguler indépendamment les vitesses de rotation des pompes.

L'engin spatial conforme à l'invention comporte un moteur fusée dont l'alimentation comprend au moins une pompe motorisée par un dispositif de l'invention et des moyens de mise en fonction du dispositif, engin en vol.

L'invention possède des applications dans le domaine de l'astronautique, et plus généralement tous les secteurs utilisant la propulsion par moteur fusée à ergols liquides et ceux où un débit de fluide très important est requis pendant un temps relativement court.

Elle est particulièrement intéressante quand les propergols sont cryogéniques (oxygène liquide avec Hydrogène, Méthane ou kérosène liquides).

Elle est particulièrement adaptée aux véhicules suborbitaux réutilisables, pour lesquels une légère augmentation de masse est acceptable en contrepartie d'un coût de maintenance réduit.

La simplicité de l'invention procure en outre de nombreux avantages et notamment la simplicité de sa conception, des coûts de développement et de réalisation réduits une très grande fiabilité, une vitesse de pompage stabilisée et une possibilité de réutilisation de l'ensemble pompe très importante, les turbopompes actuelles n'étant elles capables au mieux que de quelques démarrages.

## Revendications

1. Dispositif de motorisation de pompe (2) d'alimentation d'ergols d'un moteur fusée (16) pour un véhicule spatial comprenant ledit moteur fusée, des réservoirs de propergols et un circuit d'alimentation en propergols dudit moteur fusée, ledit dispositif étant **caractérisé en ce qu'**il comprend un moteur à combustion interne (1, 1a, 1 b) de type aérobie fonctionnant avec un mélange comburant, carburant de type air, hydrocarbures et dont l'alimentation en comburant et carburant est réalisée par des réservoirs et un circuit séparés desdits réservoirs de propergols (3) et dudit circuit d'alimentation en propergols du moteur fusée.

2. Dispositif de motorisation selon la revendication 1 **caractérisé en ce que** le comburant nécessaire audit moteur à combustion interne est contenu dans un réservoir sous pression relié audit moteur à combustion interne par un détendeur.

3. Dispositif de motorisation selon la revendication 1 ou 2 **caractérisé en ce que** le comburant est constitué par de l'air enrichi en oxygène.

4. Dispositif de motorisation selon la revendication 1 ou 2 **caractérisé en ce que** le comburant est constitué par de l'air enrichi en gaz nitreux.

5. Dispositif de motorisation selon l'une des revendications précédentes **caractérisé en ce que** le carburant est un hydrocarbure liquide.

6. Dispositif de motorisation selon l'une des revendications précédentes **caractérisé en ce que** le carburant est du kérosène.

7. Dispositif de motorisation selon l'une des revendications 1 à 5 **caractérisé en ce que** le carburant est de l'essence.

8. Dispositif de motorisation selon l'une des revendications 1 à 5 ou 7 **caractérisé en ce que** ledit moteur à combustion interne est un moteur à pistons.

9. Dispositif de motorisation selon l'une des revendications 1 à 6 **caractérisé en ce que** ledit moteur à combustion interne est un moteur à turbine axiale et compresseur.

10. Dispositif de motorisation selon la revendication 9 **caractérisé en ce que** le moteur à turbine axiale et compresseur est un moteur d'hélicoptère.

11. Dispositif de motorisation selon l'une des revendications précédentes **caractérisé en ce qu'**il comporte un démarreur électrique (7) pour le moteur à combustion interne.

12. Dispositif de motorisation selon l'une des revendications précédentes **caractérisé en ce que** le moteur à combustion interne comporte un circuit de refroidissement fonctionnant en circuit fermé par le moyen d'un échangeur de chaleur (12) placé sur les canalisations (14) d'admission des ergols du moteur fusée.

13. Dispositif d'alimentation de moteur fusée **caractérisé en ce qu'**il comporte au moins deux pompes chacune motorisée par un dispositif selon l'une des revendications précédentes et des moyens de gestion (8, 9) des moteurs à combustion interne d'entraînement des pompes adaptés pour faire varier indépendamment les paramètres de fonctionnement de ces moteurs en sorte de réguler indépendamment les vitesses de rotation des pompes.

14. Moteur fusée de véhicule spatial alimenté par au moins une pompe **caractérisé en ce qu'**il comporte un dispositif d'alimentation de ladite pompe selon l'une des revendications 1 à 11.

15. Procédé de mise en route et d'alimentation d'un moteur fusée au moyen de pompes (2) motorisées par au moins un dispositif selon l'une des revendications 1 à 12 **caractérisé en ce qu'**il comporte:
- une étape de démarrage du moteur à combustion interne (1) dudit au moins un dispositif à une altitude de mise à feu du moteur fusée et de mise en froid de la pompe (2) couplée au moteur à combustion interne (1),
- une étape d'ouverture de vannes (10) de réservoirs (3) d'ergols du moteur fusée en parallèle à une montée au régime nominal de fonctionnement du moteur à combustion interne (1),
- une étape d'amorçage des pompes (2) par la pression des réservoirs (3) d'ergols et de début d'alimentation du moteur fusée,
- une régulation du débit des pompes par régulation (8, 9) du régime de rotation du ou des moteurs à combustion interne (1) d'entraînement des pompes.

## Patentansprüche

1. Vorrichtung zum Antrieb einer Pumpe (2) zur Versorgung eines Raketentriebwerks (16) für ein Raumfahrzeug mit Treibstoffen, welche das Raketentriebwerk, Treibstofftanks und ein Leitungssystems zur Versorgung des Raketentriebwerks mit Treibstoffen aufweist, wobei die Vorrichtung **dadurch gekennzeichnet ist, dass** sie einen aeroben Verbrennungsmotor (1, 1a, 1b) aufweist, welcher mit einem Gemisch aus Sauerstoffträger und Kraftstoff vom Typ Luft, Kohlenwasserstoffe arbeitet, und dessen Versorgung mit Sauerstoffträger und Kraftstoff durch Tanks und ein von den Treibstofftanks (3) und dem Leitungssystem zur Versorgung des Raketentriebwerks mit Treibstoffen getrennten Leitungssystem erzielt wird.

2. Antriebsvorrichtung nach Anspruch 1, **dadurch gekennzeichnet, dass** der für den Verbrennungsmotor notwendige Kraftstoff in einem unter Druck stehenden Tank enthalten ist, welcher über einen Druckminderer mit dem Verbrennungsmotor verbunden ist.

3. Antriebsvorrichtung nach Anspruch 1 oder 2, **dadurch gekennzeichnet, dass** der Sauerstoffträger von mit Sauerstoff angereicherter Luft gebildet wird.

4. Antriebsvorrichtung nach Anspruch 1 oder 2, **dadurch gekennzeichnet, dass** der Sauerstoffträger von mit nitrosen Gasen angereicherter Luft gebildet wird.

5. Antriebsvorrichtung nach einem der vorhergehenden Ansprüche, **dadurch gekennzeichnet, dass** der Kraftstoff ein flüssiger Kohlenwasserstoff ist.

6. Antriebsvorrichtung nach einem der vorhergehenden Ansprüche, **dadurch gekennzeichnet, dass** der Kraftstoff Kerosin ist.

7. Antriebsvorrichtung nach einem der Ansprüche 1 bis 5, **dadurch gekennzeichnet, dass** der Kraftstoff Benzin ist.

8. Antriebsvorrichtung nach einem der Ansprüche 1 bis 5 oder 7, **dadurch gekennzeichnet, dass** der Verbrennungsmotor ein Kolbenmotor ist.

9. Antriebsvorrichtung nach einem der Ansprüche 1 bis 6, **dadurch gekennzeichnet, dass** der Verbrennungsmotor ein Motor mit axialer Turbine und Verdichter ist.

10. Antriebsvorrichtung nach Anspruch 9, **dadurch gekennzeichnet, dass** der Motor mit axialer Turbine und Verdichter ein Hubschraubertriebwerk ist.

11. Antriebsvorrichtung nach einem der vorhergehenden Ansprüche, **dadurch gekennzeichnet, dass** sie einen elektrischen Starter (7) für den Verbrennungsmotor aufweist.

12. Antriebsvorrichtung nach einem der vorhergehenden Ansprüche, **dadurch gekennzeichnet, dass** der Verbrennungsmotor einen Kühlkreis aufweist, welcher mittels eines an den Einlassleitungen (14) der Treibstoffe des Raketentriebwerks angeordneten Wärmetauscher (12) in geschlossenem Kreislauf arbeitet.

13. Vorrichtung zur Versorgung eines Raketentriebwerks, **dadurch gekennzeichnet, dass** sie mindestens zwei Pumpen, welche jeweils von einer Vorrichtung nach einem der vorhergehenden Ansprüche angetrieben werden, und Mittel zur Steuerung (8, 9) der Verbrennungsmotoren zum Antrieb der Pumpen aufweist, welche dafür angepasst sind, die Betriebsparameter dieser Motoren variieren zu lassen, so dass die Drehgeschwindigkeiten der Pumpen unabhängig geregelt werden.

14. Raketentriebwerk für ein Raumfahrzeug, welches von mindestens einer Pumpe versorgt wird, **dadurch gekennzeichnet, dass** es eine Vorrichtung zur Versorgung der Pumpe nach einem der Ansprüche 1 bis 11 aufweist.

15. Verfahren zur Inbetriebnahme und Versorgung eines Raketentriebwerks mittels Pumpen (2), welche von mindestens einer Vorrichtung nach einem der Ansprüche 1 bis 12 angetrieben werden, **dadurch gekennzeichnet, dass** es aufweist:
einen Schritt des Startens des Verbrennungsmotors (1) der mindestens einen Vorrichtung bei einer Höhe zur Zündung des Raketentriebwerks und des Kühlens der mit dem Verbrennungsmotor (1) gekoppelten Pumpe (2),
einen Schritt des Öffnens von Ventilen (10) von Treibstofftanks (3) des Raketentriebwerks parallel zu einem Anstieg der Betriebs-Nenndrehzahl des Verbrennungsmotors (1),
einen Schritt des Ansaugens der Pumpen (2) durch den Druck der Treibstofftanks (3) und des Beginns der Versorgung des Raketentriebwerks,
eine Regulierung des Durchsatzes der Pumpen durch Regulierung (8, 9) der Drehzahl des oder der Verbrennungsmotoren (1) zum Antrieb der Pumpen.

## Claims

1. Pump drive device for the propellant supply pump (2) of a rocket engine (16) for a spacecraft comprising the said rocket engine, propellant tanks and a circuit for supplying the said rocket engine with propellant, the said device being **characterized in that** it comprises an internal combustion engine (1, 1a, 1b) of aerobic type operating on an oxidant/fuel mixture of the air/hydrocarbon type and in which the supply of oxidant and fuel is performed from tanks and a circuit which are separate from the said propellant tanks (3) and from the said propellant supply circuit of the rocket engine.

2. Drive device according to Claim 1, **characterized in that** the oxidant needed for the said internal combustion engine is contained in a pressurized tank connected to the said internal combustion engine by a pressure reducer.

3. Drive device according to Claim 1 or 2, **characterized in that** the oxidant consists of oxygen-enriched air.

4. Drive device according to Claim 1 or 2, **characterized in that** the oxidant consists of air enriched with nitrous gas.

5. Drive device according to any one of the preceding claims, **characterized in that** the fuel is a liquid hydrocarbon.

6. Drive device according to any one of the preceding claims, **characterized in that** the fuel is kerosene.

7. Drive device according to one of Claims 1 to 5, **characterized in that** the fuel is petroleum.

8. Drive device according to one of Claims 1 to 5 or 7, **characterized in that** the said internal combustion engine is a piston engine.

9. Drive device according to one of Claims 1 to 6, **characterized in that** the said internal combustion engine is an engine of axial turbine and compressor type.

10. Drive device according to Claim 9, **characterized in that** the axial turbine and compressor engine is a helicopter engine.

11. Drive device according to any one of the preceding claims, **characterized in that** it comprises an electric starter (7) for the internal combustion engine.

12. Drive device according to any one of the preceding claims, **characterized in that** the internal combustion engine comprises a cooling circuit operating in closed circuit by means of a heat exchanger (12) placed on rocket engine propellant intake pipes (14).

13. Rocket engine supply device, **characterized in that** it comprises at least two pumps each driven by a device according to one of the preceding claims, and management means (8, 9) for managing the pump drive internal combustion engines which are designed to cause the operating parameters of these engines to vary independently so that the rotational speeds of the pumps can be regulated independently.

14. Spacecraft rocket engine supplied by at least one pump, **characterized in that** it comprises a pump supply device according to one of Claims 1 to 11.

15. Method for starting and supplying a rocket engine using pumps (2) driven by at least one device according to one of Claims 1 to 12, **characterized in that** it comprises:
- a step of starting the internal combustion engine (1) of the said at least one device at a rocket engine ignition altitude and of cooling the pump (2) coupled to the internal combustion engine (1),
- a step of opening valves (10) on propellant tanks (3) of the rocket engine in parallel with an increase in the nominal operating speed of the internal combustion engine (1),
- a step of priming the pumps (2) using the pressure of the propellant tanks (3) and of starting to supply the rocket engine,
- regulation of the delivery of the pumps by regulating (8, 9) the rotational speed of the internal combustion engine or engines (1) driving the pumps.
